# EUROPÄISCHE PATENTANMELDUNG

(11) **EP 2 098 571 A1**
(43) Veröffentlichungstag der Anmeldung: **09.09.2009**
(21) Anmeldenummer: 08004250.0
(22) Anmeldetag: 07.03.2008
(51) Int. Cl.: C08L 79/04, C08L 83/04

(54) **Modifiziertes Reaktionsharz**

(71) Anmelder: ROBERT BOSCH GMBH, 70469 Stuttgart-Feuerbach (DE); Nanoresins AG, 21502 Geesthacht (DE)
(72) Erfinder: Eger, Christian, 21357 Bardowick (DE); Jennrich, Irene, 71364 Winnenden (DE)
(74) Vertreter: Glawe, Delfs, Moll

(57) **Zusammenfassung**

Gegenstand des Patents ist ein modifiziertes Reaktionsharz, das enthält:
a) wenigstens einen Cyanatester;
b) wenigstens ein Polyorganosiloxan, das in dem Reaktionsharz in feinverteilter Form enthalten ist.

Das so modifizierte Reaktionsharz ist in nicht ausgehärteter Form langfristig lagerstabil und kann zu Duromeren mit vorteilhaften mechanischen Eigenschaften ausgehärtet werden.

## Beschreibung

Die Erfindung betrifft ein modifiziertes Reaktionsharz, ein Verfahren zu seiner Herstellung sowie dessen Verwendung zur Herstellung duromerer Kunststoffe.

Reaktionsharze sind im Stand der Technik bekannt. Es handelt sich dabei um Produkte, die vor der Verarbeitung flüssig oder plastisch verformbar sind und durch eine Polyreaktion (insbesondere Polymerisation, Polykondensation oder Polyaddition) unter in der Regel formgebender Verarbeitung duromere Kunststoffe ergeben. Die Polyreaktion führt zu einem dreidimensional vernetzten, harten und nicht schmelzbaren Harz, das als Duromer bezeichnet wird.

Vernetzte Reaktionsharze weisen in der Regel eine gute Härte, Festigkeit, Chemikalienresistenz und Temperaturbeständigkeit auf. Diese vorteilhaften Eigenschaften verdanken sie einer in der Regel hohen Vernetzungsdichte. Aufgrund dieser Eigenschaften werden Reaktionsharze beispielsweise verwendet für die Herstellung von faserverstärkten Kunststoffen, für die Herstellung von Isolier- und Vergussmassen in der Elektrotechnik, zur Herstellung von Konstruktionsklebstoffen, Schichtpressstoffen, Einbrennlacken und dergleichen.

Der hohe Vernetzungsgrad, der zu den vorstehend genannten vorteilhaften Eigenschaften führt, bedingt allerdings auch eine Reihe von Nachteilen. Duromere sind in der Regel spröde und haben eine geringe Bruch- und Schlagzähigkeit, insbesondere bei niedrigen Temperaturen.

Es ist bereits vorgeschlagen worden (EP-A-0 266 513), die mechanischen Eigenschaften von Reaktionsharzen durch Zusatz von Polyorganosiloxanen zu verbessern.

Der Erfindung liegt die Aufgabe zugrunde, ein modifiziertes Reaktionsharz zur Verfügung zu stellen, das als noch nicht ausgehärtetes Vorprodukt gute Lager- und Verarbeitungseigenschaften aufweist und zu Duromeren mit guten mechanischen Eigenschaften verarbeitet werden kann.

Das erfindungsgemäße modifizierte Reaktionsharz enthält:
a) wenigstens einen Cyanatester;
b) wenigstens ein Polyorganosiloxan, das in dem Reaktionsharz in feinverteilter Form enthalten ist.

Zunächst seien einige im Rahmen der Erfindung verwendete Begriffe erläutert.

Cyanatester weisen eine -O-C≡N Gruppe auf. Cyanatestermonomere oder Präpolymere können über eine sogenannte Cyclotrimerisation von drei OCN-Gruppen miteinander vernetzen. Diese Cyclotrimerisation als Aushärtreaktion findet in der Regel bei erhöhter Temperatur (üblicherweise 150 bis 250°C) statt, vorteilhafterweise in Gegenwart geeigneter tertiärer Amine als Katalysatoren wie beispielsweise Diazabicyclooctan (DABCO) oder 4-Dimethylaminopyridin. Die Trimerisation erfolgt ohne Abspaltung flüchtiger Stoffe, so dass fehlerfreie Vergussmassen erhalten werden können. Cyanatester weisen als ausgehärtete Duromere hohe Glasübergangstemperaturen Tg bis zu 400°C und eine niedrige dielektrische Konstante auf. Die Cyanatestermonomere weisen in der Regel zwei OCN-Gruppen auf, so dass durch die Trimerisation ein dreidimensional vernetztes Duromer entsteht.

Bei den verwendeten Cyanatestern kann es sich insbesondere um die Cyanate eines Bisphenols handeln. Beispiele für Bisphenol basierte Cyanatester sind Bisphenol-A-Cyanatester, Hexafluorobisphenol-A-Cyanatester, BisphenolE-Cyanatester (4,4-Ethylidendiphenylcyanatester), Tetramethylbisphenol-F-Cyanatester, Bisphenol-M-Cyanatester, Bisphenol-C-Cyanatester, und die Cyclopentadienylbisphenolcyanatester. Andere geeignete Cyanatester sind beispielsweise Novolaccyanatester bzw. Phenolnovolaccyanatester.

Für die erfindungsgemäß eingesetzten Polyorganosiloxane können jedwede Polyorganosiloxane verwendet werden, die nach der Vernetzung kautschukelastische Polymere bilden. Die Glasübergangstemperatur Tg liegt bevorzugt bei -80 bis -120°C.

Es können Polyorganosiloxane verwendet werden, die sich von Siloxaneinheiten der allgemeinen Formel

-(R₂SiO)- (1)

ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl oder Alkylphenylgruppen mit 1 bis 12 C-Atomen im aliphatischen Rest, wobei die Kohlenwasserstoffreste auch durch Halogene oder Hydroxyl , Carboxyl-, Carbonsäureanhydrid-, Amino-, Epoxy-, Alkoxy-oder Alkenyloxygruppen substituiert sein können, ferner Polyether- oder Polyolefingruppen sowie Wasserstoff darstellen, wobei die Gruppen direkt oder über ein Sauerstoff- oder Stickstoffatom mit einem Siliciumatom der Polysiloxankette verbunden sind.

Beispiele für solche Reste R sind Methyl-, Ethyl-, Isopropyl-, Isobutyl , Dodecyl- und Octadecylgruppen, Cyclopentyl-, Cyclohexyl- und Cyclooctylgruppen, Vinyl-, Allyl-, Isopropenyl und 3-Butenylgruppen, Ethylphenyl-, Dodecylgruppen, ferner Gruppen mit Kohlenwasserstoffresten, die zum Teil substituiert sind, beispielsweise durch Halogene, wie Fluor oder Chlor, wie z.B. beim Chlorpropyl oder beim 1,1,1-Trifluorpropylrest. Zumindest ein Teil der Reste R kann auch aus polymeren Gruppen bestehen, wobei hier insbesondere Polyether, wie Polyethylen-, Polypropylen-, Polybutylen oder Polyhexamethylenglykol oder Polytetrahydrofuran sowie Mischpolymere aus diesen Ethern, ferner Polyolefine, z.B. Polybutadien, Polyisopren, Polybuten, Polyisobuten u.dgl., infrage kommen. Schließlich kann ein Teil der Reste R auch Wasserstoff sein. Es ist auch möglich, Mischungen der vorgenannten Polyorganosiloxane zu verwenden.

Ferner ist es möglich, erfindungsgemäß solche Polyorganosiloxane einzusetzen, bei denen verschiedene Reste R im Polymermolekül vorhanden sind. Diese verschiedenen Reste können sich entlang der Siloxanhauptkette statistisch verteilen. In einer bevorzugten Ausführungsform ist der erfindungsgemäss angewandte Polyorganosiloxankautschuk ein Blockcopolymeres, bei dem einwertige Reste R' und R" entlang der Siloxanhauptkette in Blöcken angeordnet sind, die sich von Polymereinheiten der allgemeinen Formel

-(R'₂SiO)ₓ-(R''₂SiO)_{y}- (2)

ableiten, wobei die Reste R' und R'', die die gleiche Bedeutung wie R haben, voneinander verschieden sind, während die Reste R' bzw. R" unter sich gleich oder verschieden sein können, und x und y gleich 1 oder ganzzahlige Vielfache davon sind.

Wegen der leichten Verfügbarkeit bei gleichzeitig guter Wirkung sind solche Polyorganosiloxane bevorzugt, bei denen mindestens 50% der Reste R, R' bzw. R" Methyl- und/oder Phenylgruppen darstellen.

Ein erfindungsgemäßes modifiziertes Reaktionsharz zeichnet sich durch eine hohe Lagerstabilität aus. Die Dispersion der fein verteilten Polyorganosiloxanteilchen in dem Cyanatester bleibt überraschenderweise auch über längere Lagerzeiträume stabil erhalten. In diesem lagerfähigen Zustand sind die Polyorganosiloxanteilchen vorzugsweise bereits im wesentlichen zu einem kautschukartigen Polyorganosiloxan vernetzt, während eine Vernetzungsreaktion des Cyanatesters nicht oder allenfalls in geringem Umfang stattgefunden hat.

Vorzugsweise können die dispergierten Polyorganosiloxanteilchen mittels an ihrer Oberfläche angeordneten reaktiven Gruppen mit dem Cyanatester reagieren, wenn dieses zur Reaktion oder Aushärtung gebracht wird.

Ein erfindungsgemäßes Reaktionsharz enthält bevorzugt 40 bis 98 Gew.-%, weiter vorzugsweise 50 bis 98 Gew.-% Cyanatester. Bevorzugt ist ferner ein Gehalt von 2 bis 60 Gew.-%, weiter vorzugsweise 2 bis 50 Gew.-% Polyorganosiloxan.

Das Polyorganosiloxan ist in dem Reaktionsharz fein verteilt. Bevorzugt weisen die dispergierten Teilchen einen mittleren Durchmesser von 0,01 bis 50 µm, weiter vorzugsweise 0,05 bis 20 µm, weiter vorzugsweise 0,1 bis 5 µm auf.

Die feine Verteilung der flüssigen Polyorganosiloxane in den flüssigen Reaktionsharzen kann mit allen für die Herstellung von Emulsionen bekannten Maßnahmen und Hilfsmitteln bewirkt werden. Hierzu zählen insbesondere mechanische Aggregate, die eine hinreichend hohe Scherwirkung in dem zu dispergierenden Medium entfalten, wie z.B. Rührer, Dissolver, Kneter, Walzenstühle, Hochdruckhomogenisatoren, Ultraschallhomogenisatoren u. dgl. Geeignet zur Erzielung einer feinen Verteilung sind Dispergiergeräte vom Typ "Ultra-Turrax". Es versteht sich, dass die zur Erzielung einer bestimmten Verteilung aufzubringenden Scherkräfte von den Viskositäten des Polysiloxans und des Reaktionsharzes bzw. Reaktionsharzgemisches abhängig sind. Bei sehr hohen Viskositäten, insbesondere des Reaktionsharzes, müssen daher unter Umständen so hohe Scherkräfte aufgebracht werden, dass entweder entsprechend starke Dispergiermaschinen eingesetzt werden oder aber Viskositätserniedrigungen durch entsprechende Temperaturerhöhung bewirkt werden müssen. Die angewandten erhöhten Temperaturen dürfen jedoch nicht dazu führen, dass eine merkliche Vernetzung der Polyorganosiloxane bzw. der Reaktionsharze während der Dispergierphase auftritt. Dies lässt sich in an sich bekannter Weise durch geeignete Wahl der Vernetzungssysteme kontrollieren.

Um beim Dispergieren der Polyorganosiloxane die gewünschten Teilchengrößen zu erreichen und/oder die erhaltene Polyorganosiloxandispersion zu stabilisieren, kann es erforderlich oder wünschenswert sein, bestimmte dispergierend wirkende Zusätze einzusetzen. In den Fällen, in denen die Siloxankomponente durch geeignete Wahl eines Teils der Reste R, R' oder R'' selbst eine hinreichende Dispergierfähigkeit aufweist, wobei diese Reste zweckmäßigerweise eine chemische Konstitution besitzen, die mit dem jeweiligen Reaktionsharz gut verträglich ist, erübrigen sich Dispergiermittelzusätze. In allen anderen Fällen aber, in denen derartige substituierte Polysiloxane entweder nicht verfügbar oder nur aufwendig herzustellen sind, kann die Verwendung eines separaten Dispergiermittels vorteilhaft sein. Vorzugsweise werden als Dispergiermittel Verbindungen mit amphiphiler Struktur eingesetzt, wobei ein Teil der Gruppen solcher amphiphiler Moleküle so ausgewählt ist, dass er mit den eingesetzten Polyorganosiloxanen verträglich ist, während ein anderer Teil der Gruppen so ausgewählt ist, dass er mit dem Reaktionsharz bzw. Reaktionsharzgemisch verträglich ist.

Die geeigneten Dispergiermittel besitzen demnach eine bestimmten Emulgatoren analoge amphiphile Struktur. Besonders bewährt und daher bevorzugt werden als Dispergiermittel Copolymere mit einem Polyorganosiloxanteil und einem kohlenstofforganischen Teil, der mit dem Reaktionsharz bzw. Reaktionsharzgemisch verträglich ist, eingesetzt. Die Herstellung derartiger Copolymere ist im Prinzip bekannt und z.B. in W. Noll, "Chemie und Technologie der Silikone", Weinheim 1968, ausführlich beschrieben.

Die für den erfindungsgemäßen Zweck geeigneten Dispergiermittel sind bezüglich ihres Molekulargewichts unkritisch, d.h. das Molekulargewicht kann in weiten Grenzen variieren. Vorzugsweise werden Dispergiermittel eingesetzt, die ein mittleres Molekulargewicht von 300 bis 50.000 aufweisen. Wesentlich ist in jedem Falle, dass das gewählte Dispergiermittel sich unter den Bedingungen des Dispergiervorganges an der Phasengrenzfläche zwischen Polyorganosiloxan und Reaktionsharz befindet.

Die erforderliche Konzentration an Dispergiermittel hängt weitgehend von seiner Wirksamkeit, der chemischen Konstitution der Polysiloxane und Reaktionsharze und den Dispergierbedingungen ab. In der Praxis werden mit Konzentrationen von 2 -20 Gew.-%, vorzugsweise 5 - 15 Gew.-% gute Wirkungen erzielt.

Im Rahmen der Erfindung besonders bevorzugt sind Polyether-Polydimethylsiloxan-Copolymere. Der Polydimethylsiloxananteil an diesen Copolymeren beträgt bevorzugt etwa 25 Gew.-%. Innerhalb des Polyetheranteils können bevorzugt Ethylenoxid- und Propylenoxideinheiten vorgesehen sein, das bevorzugte Gewichtsverhältnis von Ethylen- und Propylenoxideinheiten im Polyether beträgt etwa 40 zu 60. Ein bevorzugter Molekulargewichtsbereich ist 10.000 bis 15.000 g/mol, weiter bevorzugt etwa 13.000 g/mol. Die Viskosität bei 25°C beträgt bevorzugt 2.000 bis 4.000 mPas.

Überraschenderweise hat sich gezeigt, dass solche Copolymere in der Lage sind, Polysiloxane in Cyanatestern zu emulgieren und solche Emulsionen bzw. Dispersionen längerfristig lagerstabil sind.

Das mittlere Molekulargewicht der im erfindungsgemäßen Verfahren verwendbaren flüssigen, unvernetzten Polyorganosiloxane kann in weiten Grenzen variieren und liegt im allgemeinen im Bereich von 800 bis 500.000. Die untere Grenze wird dadurch bestimmt, dass mit abnehmendem Molekulargewicht die Vernetzungsdichte des Polyorganosiloxankautschuks größer wird und dadurch dessen Elastizität abnimmt. Dieser Effekt kann allerdings durch Zusatz bifunktioneller Vernetzungsmittel in gewissen Grenzen abgeschwächt werden. Die obere Grenze ist durch die mit steigendem Molekulargewicht zunehmende Viskosität der Polyorganosiloxane gegeben, die die erwünschte feine Verteilung der Siloxane in den flüssigen Reaktionsharzen erschwert. In einer bevorzugten Ausführungsform des erfindungsgemäßen Verfahrens weist das eingesetzte unvernetzte Polyorganosiloxan oder Polyorganosiloxangemisch ein mittleres Molekulargewicht im Bereich von 1.000 bis 100.000, besonders bevorzugt von 1.200 bis 30.000, auf. Hierbei ist zu berücksichtigen, dass die Polyorganosiloxane ebenso wie die meisten anderen Polymeren keine einheitlichen Molekulargewichte, sondern eine mehr oder weniger breite Molekulargewichtsverteilung haben.

Die Art der Vernetzung, durch die die flüssigen Polyorganosiloxane zu elastischen Silikonkautschukpartikeln umgewandelt werden, ist ohne Belang, solange gewährleistet ist, dass durch die Vernetzungsreaktion die feine Verteilung der Polysiloxanteilchen nicht wesentlich gestört wird und dass in der Reaktionsharzphase keine oder nur unwesentliche Vernetzungsreaktionen stattfinden. Sofern diese Voraussetzungen erfüllt sind, können alle üblicherweise zur Vernetzung von Polysiloxanelastomeren verwendeten Härtungsverfahren angewendet werden, insbesondere die bekannten Additions-und Kondensationsverfahren. Additionsvernetzende Polysiloxane sind bevorzugt.

Für die Durchführung der Additionsvernetzung müssen in der Polyorganosiloxanmischung in ausreichender Zahl Gruppen vorhanden sein, die direkt an Silicium gebundenen Wasserstoff aufweisen, also SiH-Gruppen, sowie olefinisch ungesättigte Reste, die an die SiH-Gruppen addiert werden können (sog. Hydrosilylierungsreaktion). Im einfachsten Fall handelt es sich bei dem vernetzbaren Polyorganosiloxan um ein Polydimethylsiloxan mit Vinylendgruppen, dem 1 bis 10% eines Polymethylhydrogensiloxans als Vernetzer zugesetzt sind. Die Additionsvernetzung findet bevorzugt bei Raumtemperatur, ggf. auch bei erhöhten Temperaturen, z.B. zwischen 60 und 140°C, in Gegenwart eines Edelmetallkatalysators statt. Hierfür werden normalerweise Verbindungen der Elemente der Platingruppe des Periodischen Systems verwendet, z.B. Platin, Palladium oder Rhodium. Ein häufig verwendeter Katalysator ist z.B. Hexachlorplatinsäure, gelöst in geeigneten Lösungsmitteln, z.B. in Glykolether oder Isopropanol. Geeignete Katalysatoren sind auch die Umsetzungsprodukte von Edelmetallchloriden mit Vinylgruppen enthaltenden organischen oder siliciumorganischen Verbindungen oder die Edelmetalle selbst in feiner Verteilung auf geeigneten Trägern wie Aktivkohle oder Aluminiumoxid.

Kondensationsvernetzende Siloxane weisen direkt an Silicium gebundene leicht abspaltbare Reste auf, z.B. Hydroxyl-, Alkoxy-, Acyloxy-, Ketoximino-, Amin-, Aminoxy- oder Alkylamidgruppen oder Wasserstoff. Diese abspaltbaren Reste können in den Polyorganosiloxanen selbst angeordnet sein und/oder in speziell als Vernetzer zugesetzten Silanen. Häufig verwendete kondensationsvernetzende Polysiloxanelastomere bestehen aus Polydimethylsiloxanen mit Hydroxylendgruppen und als Vernetzer zugesetzten Tri- oder Tetraorganooxysilanen, wie Methyltriacetoxysilan, Tetraethoxysilan, Methyltris(methylethylketoximino)silan oder Polymethylhydrogensiloxan. Die Verwendung von Kondensationskatalysatoren ist hierbei nicht unbedingt erforderlich, kann aber dann empfehlenswert sein, wenn die Dauer der Vernetzungsreaktion verkürzt oder die für die Vernetzung erforderliche Temperatur erniedrigt werden soll. Als geeignete Katalysatoren kommen in erster Linie organische Schwermetallsalze infrage, wie z.B. die bekannten Octoate, Laurate, Naphthenate oder Acetate von Zinn, Zirkonium, Blei und Titan.

Diese für die Herstellung von Siloxanelastomeren bekannten Vernetzungsmethoden lassen sich durch solche Verknüpfungsreaktionen erweitern, die die dreidimensionale Vernetzung der linearen Polyorganosiloxanmoleküle bewirken können. Die für solche Verknüpfungsreaktionen erforderlichen reaktiven Gruppen können nicht nur, wie für die bekannten Fälle der Additions- und Kondensationsvernetzung vorstehend beschrieben wurde, direkt an der Polysiloxanhauptkette sitzen, sondern auch mit den organischen Resten R, R' oder R" der oben angegebenen Formeln (1) und (2) verbunden sein bzw. mit den weiter oben beschriebenen funktionellen Gruppen, mit denen diese Reste substituiert sein können, identisch sein.

Zur Erreichung des erfindungsgemäßen Zwecks ist nicht die Art der Verknüpfung an sich entscheidend, sondern jede Art der Verknüpfung ist geeignet, bei der im wesentlichen dreidimensional vernetzte Polyorganosiloxane gebildet werden, deren Vernetzungsdichte einerseits niedrig genug ist, um dem Vernetzungsprodukt elastomere und nicht harzartige Eigenschaften zu verleihen, andererseits aber ausreichend hoch genug ist, damit das Vernetzungsprodukt ein Mindestmaß an kautschukelastischen Eigenschaften auf weist.

Die durchschnittliche Teilchengröße der Polyorganosiloxankautschukteilchen und deren Größenverteilung üben einen Einfluss auf die wesentlichen Eigenschaften des ausgehärteten modifizierten Reaktionsharzes aus, insbesondere auf dessen Bruch- und Schlagzähigkeit. Es ist daher vorteilhaft zur Erreichung des erfindungsgemäß angestrebten Erfolgs, dass die Teilchengrößen in den o.g. bevorzugten Bereichen liegen, wobei eine bessere Wirkung erhalten wird, wenn statt einer sehr schmalen ("unimodalen") eine breite Verteilung der Teilchengrößen, z.B. über den gesamten besonders bevorzugten Bereich von 0,1 bis 5 µm, vorliegt. Die Teilchengrößenverteilung kann beispielsweise durch eine kontinuierliche Durchmesserverteilungskurve in der Art einer Gaußschen Verteilungskurve charakterisiert sein, sie kann aber auch aus zwei oder drei Größenklassen mit jeweils engerer Größenverteilung ("bi- oder trimodal") zusammengesetzt sein.

Die gewünschte Teilchengrößenverteilung der vernetzten Polyorganosiloxankautschuk-Teilchen, die sich in der Reaktionsharzmatrix befinden, kann bereits während des Dispergiervorganges bei der Bildung der unvernetzten Polyorganosiloxantröpfchen durch die Auswahl der Scherkräfte und gegebenenfalls des Dispergiermittels vorbestimmt und in weiten Grenzen gesteuert werden. Es sollte darauf geachtet werden, dass die beim Dispergieren erhaltene Teilchengrößenverteilung bei den nachfolgenden Verfahrensschritten, insbesondere beim Vernetzen der Polyorganosiloxane und beim Härten der Reaktionsharze, im Wesentlichen unverändert bleibt. Es ist aber auch möglich und beeinträchtigt den erfindungsgemäß angestrebten Erfolg nicht oder kaum, wenn ein Teil der beim Dispergieren gebildeten Teilchen in den darauffolgenden Verfahrensschritten koaguliert bzw. agglomeriert, d.h. sich zu Partikeln mit größerem Durchmesser verbindet. Dadurch entstehen normalerweise Teilchen unterschiedlicher Größenklassen, wodurch es beispielsweise zu der vorstehend erwähnten bi- oder trimodalen Größenverteilung kommen kann.

Wie bereits oben erwähnt, ist es zur Erreichung einer verbesserten Bruch- und Schlagzähigkeit bei den ausgehärteten modifizierten Reaktionsharzen vorteilhaft, dass die feinverteilten Polysiloxankautschukteilchen eine chemische Bindung mit dem Reaktionsharz eingehen. Die Bindung wird vorteilhafterweise durch eine chemische Reaktion zwischen an der Oberfläche der Kautschukteilchen befindlichen reaktiven Gruppen und entsprechenden im Reaktionsharz vorhandenen reaktiven Gruppen bewirkt, wobei die an der Oberfläche der Polysiloxanteilchen befindlichen reaktiven Gruppen auf die reaktiven Gruppen des jeweiligen Cyanatesters abgestimmt sind.

Damit die Polyorganosiloxankautschukteilchen mit dem Reaktionsharz chemisch reagieren können, müssen sich die reaktiven Gruppen an der Oberfläche der Polyorganosiloxankautschukteilchen befinden. Das kann beispielsweise dadurch realisiert werden, dass die im Polyorganosiloxan enthaltenen Reste R, R' oder R'' entsprechend reaktive Substituenten tragen, wie bereits vorstehend beispielhaft ausgeführt wurde. Bevorzugt ist, dass diese Substituenten die Vernetzungsreaktion der Polyorganosiloxane nicht in unerwünschter Weise beeinflussen. Eine weitere Möglichkeit besteht in der entsprechenden, zumindest teilweisen Substituierung der gegebenenfalls beim Dispergierungsvorgang der Polyorganosiloxane verwendeten Dispergiermittel mit den gewünschten bzw. erforderlichen reaktiven Gruppen. Mit dem erfindungsgemäßen Verfahren lässt sich dies besonders einfach dadurch realisieren, dass bei der Auswahl eines geeigneten amphiphil aufgebauten Dispergiermittels darauf geachtet wird, dass dessen kohlenstofforganischer Bestandteil geeignete reaktive Gruppen aufweist. In einer bevorzugten Ausgestaltung des erfindungsgemäßen Verfahrens wird daher ein Dispergiermittel mit einem kohlenstofforganischen Teil eingesetzt, der reaktive Gruppen aufweist, die als Reaktionsvermittler chemische Bindungen zwischen den Polyorganosiloxanteilchen und dem Reaktionsharz bzw. Reaktionsharzgemisch bewirken können.

Eine weitere Möglichkeit ergibt sich durch den Einsatz von als Reaktionsvermittler dienenden Zusätzen. Um die angestrebte chemische Verankerung der Silikonkautschukteilchen an die Harzmatrix zu gewährleisten, muss ein solcher Reaktionsvermittler zusätzlich auch chemische Gruppierungen aufweisen, die ihn an die Silikonkautschukteilchen binden. Als solche Reaktionsvermittler zwischen Polyorganosiloxankautschukteilchen und Reaktionsharz werden vorzugsweise Organoalkyloxysilane und/oder Organo-Silikon-Copolymere mit an die Polyorganosiloxane und Cyanatester angepassten reaktiven Gruppen eingesetzt Geeignete Organoalkyloxysilane sind z.B. Vinyltrimethoxysilan, Glycidyloxypropyltrimethoxysilan, Aminopiropyltriethoxysilan, Methacryloyloxypropyltrimethoxysilan u. dgl. Organo-Silikon-Copolymere, die für diesen Zweck geeignet sind, können im Prinzip ähnlich aufgebaut sein wie die vorstehend beschriebenen Dispergiermittel. Beispiele für geeignete Organo-Silikon-Copolymere sind Kondensationsprodukte aus niedrigmolekularen silanolterminierten Polydimethylsiloxanen mit Diglycidylethern, Hydroxycarbonsäuren bzw. hydroxyl- und carbonsäuregruppenhaltigen Polyestern, aromatischen Polyhydroxyverbindungen usw. Weitere Möglichkeiten ergeben sich durch die Hydrosilylierung von Polymethylhydrogensiloxanen mit Verbindungen, die zusätzlich zur gewünschten reaktiven Gruppe noch eine olefinische Doppelbindung aufweisen, wie Allylglycidylether, Allylalkohol, α-Alkenalkohol gestartete Polyether, Methacrylsäureallylester, 2-Hydroxyethylacrylat, Maleinsäureanhydrid u. dgl. Die Herstellung dieser Copolymeren ist dem Fachmann geläufig.

Die Reaktion, mit der die Polyorganosiloxankautschukteilchen an die Reaktionsharzmatrix chemisch gebunden werden sollen, wird zweckmäßigerweise vor oder bei der weiteren Verarbeitung des modifizierten Reaktionsharzes durchgeführt, wobei Art und Bedingungen der Durchführung weitgehend von der Art der beteiligten Reaktionspartner abhängen. Im einfachsten Falle genügt eine entsprechende Temperaturerhöhung, um die gewünschte Reaktion zu bewirken. Eine andere Möglichkeit besteht in der Zugabe einer zur Reaktion mit den reaktiven Gruppen der Polysiloxanteilchen befähigten Komponente, z.B. der oben erwähnten Reaktionsvermittler, oder diese Reaktion katalysierenden Komponente in das Reaktionsharz. Hierbei kann die zuzugebende Reaktionskomponente bzw. die katalytisch wirkende Komponente identisch sein mit den entsprechenden Komponenten, die die Härtungsreaktion des Reaktionsharzes bewirken. In diesem Falle wird die chemische Bindungsreaktion vorzugsweise erst dann durchgeführt, wenn das Reaktionsharz nach dem Formgebungsprozess gehärtet werden soll, gegebenenfalls gleichzeitig mit dieser Härtung.

Gegenstand der Erfindung ist ferner ein Verfahren zur Herstellung eines erfindungsgemäßen modifizierten Reaktionsharzes, das in den Ansprüchen 18 bis 21 definiert ist. Die Aspekte dieses Verfahrens sind oben im Zusammenhang mit der Diskussion der Eigenschaften des Reaktionsharzes bereits abgehandelt worden.

Gemäß einem Aspekt des Verfahrens kann das Polyorganosiloxan zunächst in dem Cyanatester oder einem Teil des Cyanatesters dispergiert und anschließend ein Vernetzer für das Polysiloxan zugegeben werden. Beispielsweise ist es möglich, ein sogenanntes vorkatalysiertes Polysiloxan (enthält beispielsweise bereits einen Platinkatalysator) in einem Teil des Cyanatesters zu dispergieren und anschließend einen weiteren Teil des Cyanatesters zuzugeben, bevor schließlich der Vernetzer für das Polysiloxan zugegeben wird. Anschließend setzt die Vernetzung der bereits dispergierten Polysiloxanteilchen zu einem Polysiloxankautschuk ein.

Die Erfindung wird nachfolgend anhand von Beispielen beschrieben.

### Es wurden folgende Ausgangsmaterialien verwendet:

- Primaset LECy:: (4,4'-Ethylidendiphenyldicyanat, Lonza Ltd.)
- AROCY L 10:: (4,4'-Ethylidendiphenyldicyanat, Huntsman Advanced Materials (Europe)
- Emulgator:: Polyether-Polymethylsiloxan-Copolymer Polydimethylsiloxananteil 25 Gew.-%, Verhältnis EO/PO-Einheiten 40/60, MW 13.000 g/mol, Viskosität bei 25°C 3.000 mPas
- Silikon-VM:: Vormischung aus 99,5 Gew.-% α,ω̅-̅Divinylpolydimethylsiloxan und 0,5 Gew.-% einer 1%igen Lösung von Hexachlorplatinsäure in 2-Propanol
- Vernetzer:: α,ω-Di(Trimethylsilyl)polymethylhydrogensiloxan

### Beispiel 1

In einem 10 1 Labordissolver werden 2500 g Primaset LECy und 660 g Emulgator vorgelegt und unter Rühren bei 500/min im Vakuum 5 min vermischt.

Anschließend werden 2600 g Silikon VM hinzugefügt und 25 min dispergiert (500/min im Vakuum) Im nächsten Schritt werden 2500 g Primaset LECy hinzugefügt und nochmals 15 min dispergiert. Anschließend werden 66,7 g Vernetzer hinzugefügt und weitere 10 min dispergiert.

Es wurde eine glatte, weiße bis gelbliche Dispersion erhalten.

Die erhaltene Dispersion wurde zur Prüfung der Lagerfähigkeit 14 Tage bei 20°C gelagert.

Folgende Viskositäten wurden gemessen (Kegel-Platte-Viskosimeter, 25°C)

Primaset LECy: 80 mPas

Mmodifiziertes Reaktionsharz unmittelbar nach der Herstellung: 500 mPas

Viskosität des Reaktionsharzes nach 14 Tagen/20°C: 630 mPas.

Der sehr geringe Viskositätsanstieg nach der 14 tägigen Lagerung belegt, dass ein lagerstabiles modifiziertes Reaktionsharz erhalten wurde.

### Beispiel 2

In einem 10 1 Labordissolver werden 2500 g AROCY L 10 und 660 g Emulgator vorgelegt und unter Rühren bei 500/min im Vakuum 5 min vermischt.

Anschließend werden 2600 g Silikon VM hinzugefügt und 25 min dispergiert (500/min in Vakuum) Im nächsten Schritt werden 2500 g AROCY L 10 hinzugefügt und nochmals 15 min dispergiert. Anschließend werden 66,7 g Vernetzer hinzugefügt und weitere 10 min dispergiert.

Es wurde eine glatte, weiße bis gelbliche Dispersion erhalten.

Die erhaltene Dispersion wurde zur Prüfung der Lagerfähigkeit 14 Tage bei 20°C gelagert.

Folgende Viskositäten wurden gemessen (Kegel-Platte-Viskosimeter, 25°C)

AROCY L 10: 80 mPas

Modifiziertes Reaktionsharz unmittelbar nach der Herstellung: 710 mPas

Viskosität des Reaktionsharzes nach 14 Tagen/20°C: 1.000 mPas

Der sehr geringe Viskositätsanstieg nach der 14 tägigen Lagerung belegt, dass ein lagerstabiles modifiziertes Reaktionsharz erhalten wurde.

## Patentansprüche

1. Modifiziertes Reaktionsharz, das enthält:
a) wenigstens einen Cyanatester;
b) wenigstens ein Polyorganosiloxan, das in dem Reaktionsharz in feinverteilter Form enthalten ist.

2. Modifiziertes Reaktionsharz nach Anspruch 1, **dadurch gekennzeichnet, dass** der Cyanatester ein Dicyanat eines Bisphenols ist.

3. Modifiziertes Reaktionsharz nach Anspruch 1 oder 2, **dadurch gekennzeichnet, dass** die PolyorganosiloxanTeilchen mittels an ihrer Oberfläche angeordneten reaktiven Gruppen mit dem Cyanatester reagieren können.

4. Modifiziertes Reaktionsharz nach einem der Ansprüche 1 bis 3, **dadurch gekennzeichnet, dass** es 40 - 98 Gew.-%, vorzugsweise 50 - 98 Gew.-% Cyanatester enthält.

5. Modifiziertes Reaktionsharz nach einem der Ansprüche 1 bis 4, **dadurch gekennzeichnet, dass** es 2 - 60 Gew.-%, vorzugsweise 2 - 50 Gew.-% Polyorganosiloxan enthält.

6. Modifiziertes Reaktionsharz nach einem der Ansprüche 1 bis 5, **dadurch gekennzeichnet, dass** die Polyorganosiloxanteilchen einen mittleren Durchmesser von 0,01 - 50 µm, vorzugsweise 0,05 - 20 µm, weiter vorzugsweise 0,1 - 5 µm aufweisen.

7. Modifiziertes Reaktionsharz nach einem der Ansprüche 1 bis 6, **dadurch gekennzeichnet, dass** die Polyorganosiloxane sich von Siloxaneinheiten der allgemeinen Formel
-(R₂SiO)- (1)
ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl- oder Alkylphenylgruppen mit 1 bis 12 C-Atomen im aliphatischen Rest, wobei die Kohlenwasserstoffreste auch durch Halogene oder Hydroxyl-, Carboxyl-, Carbonsäureanhydrid-, Amino-, Epoxy-, Alkoxy- oder Alkenyloxygruppen substituiert sein können, ferner Polyether-oder Polyolefingruppen sowie Wasserstoff darstellen, wobei die Gruppen direkt oder über ein Sauerstoff- oder Stickstoffatom mit einem Siliciumatom der Polysiloxankette verbunden sind.

8. Modifiziertes Reaktionsharz nach Anspruch 7, **dadurch gekennzeichnet, dass** das Polyorganosiloxan ein Blockcopolymeres ist, bei dem einwertige Reste R' und R'' entlang der Siloxanhauptkette in Blöcken angeordnet sind, die sich von Polymereinheiten der allgemeinen Formel
-(R'₂SiO)ₓ-(R''₂SiO)_{y}- (2)
ableiten, wobei die Reste R' und R'', die die gleiche Bedeutung wie R haben, voneinander verschieden sind, während die Reste R' bzw. R" unter sich gleich oder verschieden sein können, und x und y gleich 1 oder ganzzahlige Vielfache davon sind.

9. Modifiziertes Reaktionsharz nach Anspruch 7 oder 8, **dadurch gekennzeichnet, dass** mindestens 50% der Reste R, R' und R'' Methyl- und/oder Phenylgruppen sind.

10. Modifiziertes Reaktionsharz nach einem der Ansprüche 1 bis 9, **dadurch gekennzeichnet, dass** es zusätzlich wenigstens ein Dispergiermittel enthält.

11. Modifiziertes Reaktionsharz nach Anspruch 10, **dadurch gekennzeichnet, dass** der Dispergiermittelgehalt 2 -20 Gew.-%, vorzugsweise 5 - 15 Gew.-% beträgt.

12. Modifiziertes Reaktionsharz nach Anspruch 7 oder 8, **dadurch gekennzeichnet, dass** das Dispergiermittel Verbindungen mit amphiphiler Struktur aufweist, wobei ein Teil der Gruppen solcher amphiphiler Moleküle so ausgewählt ist, dass er mit den eingesetzten Polyorganosiloxanen verträglich ist, während ein anderer Teil der Gruppen so ausgewählt ist, dass er mit dem Cyanatester verträglich ist.

13. Modifiziertes Reaktionsharz nach Anspruch 12, **dadurch gekennzeichnet, dass** das Dispergiermittel ein Copolymer aus Polyorganosiloxanen und Polyethern umfasst.

14. Modifiziertes Reaktionsharz nach Anspruch 13, **dadurch gekennzeichnet, dass** das Dispergiermittel ein Copolymer aus Polymethylsiloxanen und Polyethern umfasst.

15. Modifiziertes Reaktionsharz nach Anspruch 14, **dadurch gekennzeichnet, dass** die Polyetheranteile des Copolymers Ethoxy- und/oder Propoxyeinheiten aufweisen.

16. Modifiziertes Reaktionsharz nach einem der Ansprüche 1 bis 15, **dadurch gekennzeichnet, dass** es Vernetzer für das Polyorganosiloxan enthält.

17. Modifiziertes Reaktionsharz nach Anspruch 16, **dadurch gekennzeichnet, dass** der Vernetzer eine Polyorganohydrogensiloxan, vorzugsweise ein Polymethylhydrogensiloxan umfasst.

18. Verfahren zur Herstellung eines modifizierten Reaktionsharzes gemäß einem der Ansprüche 1 bis 17, **gekennzeichnet durch** folgende Schritte:
a) Vermischen von Cyanatester und Polysiloxan;
b) Emulgieren des Polysiloxans im Cyanatester;
c) wenigstens teilweises Vernetzen des feinverteilten Polyorganosiloxans.

19. Verfahren nach Anspruch 18, **dadurch gekennzeichnet, dass** in Schritt a.) und/oder b.) zusätzlich ein Dispergiermittel zugegeben wird.

20. Verfahren nach Anspruch 18 oder 19, **dadurch gekennzeichnet, dass** zusätzlich ein Vernetzer für das Polyorganosiloxan zugegeben wird.

21. Verfahren nach einem nach Anspruch 20, **dadurch gekennzeichnet, dass** das Polyorganosiloxan zunächst in dem Cyanatester emulgiert und anschließend ein Vernetzer für das Polyorganosiloxan zugegeben wird.

22. Verwendung eines modifizierten Reaktionsharzes nach einem der Ansprüche 1 bis 17 zur Herstellung duromerer Kunststoffe.
